# EUROPÄISCHE PATENTANMELDUNG

(11) **EP 4 306 383 A2**
(43) Veröffentlichungstag der Anmeldung: **17.01.2024**
(21) Anmeldenummer: 23168737.7
(22) Anmeldetag: 19.04.2023
(51) Int. Cl.: B61K 11/00, B61C 17/02

(54) **EINFÜLLSTUTZEN, VORRATSBEHÄLTER, SCHIENENFAHRZEUG UND BEFÜLLAUTOMAT**

(30) Priorität: 21.06.2022 DE 102022206159
(71) Anmelder: Siemens Mobility GmbH, 81739 München (DE)
(72) Erfinder: Fischer, Thomas, 91056 Erlangen (DE); Merz, Corinna, 90766 Fürth (DE)
(74) Vertreter: Siemens Patent Attorneys

(57) **Zusammenfassung**

Die Erfindung betrifft einen Einfüllstutzen (100). Dieser weist eine erste Öffnung (110), eine zweite Öffnung (120) und einen zwischen der ersten Öffnung und der zweiten Öffnung liegenden Rohrabschnitt (130) auf. Die erste Öffnung weist einen ersten Flächenschwerpunkt (111) auf, die zweite Öffnung weist einen zweiten Flächenschwerpunkt (123) auf. Der Einfüllstutzen ist derart an einem Vorratsbehälter (200) anbringbar, dass die zweite Öffnung dem Vorratsbehälter zugewandt ist und die erste Öffnung vom Vorratsbehälter abgewandt ist. Ein Querschnitt des Rohrabschnitts wird von der ersten Öffnung zur zweiten Öffnung größer. Dies kann insbesondere bedeuten, dass ein erster Querschnitt des Rohrabschnitts angrenzend an die erste Öffnung kleiner ist als ein zweiter Querschnitt des Rohrabschnitts angrenzend an die zweite Öffnung. Eine Mantellinie des Rohrabschnitts weist in einem unteren Bereich (131) eine von einer Richtung einer Verbindungslinie (133) zwischen dem ersten Flächenschwerpunkt und dem zweiten Flächenschwerpunkt abweichende Mantellinienrichtung und in einem oberen Bereich (132) ein von der Richtung der Verbindungslinie abweichende Mantellinienrichtung auf.

## Beschreibung

Die Erfindung betrifft einen Einfüllstutzen, einen Vorratsbehälter mit einem solchen Einfüllstutzen, ein Schienenfahrzeug sowie einen Befüllautomat.

Schienenfahrzeuge weisen Vorratsbehälter für verschiedene Betriebsstoffe auf. Unter anderem weisen Schienenfahrzeuge Vorratsbehälter für Sand oder andere Schüttgüter auf. Mit Sand können insbesondere Beschleunigungs- und Bremsvorgänge unterstützt werden, indem Sandkörner zwischen Schiene und Rad des Schienenfahrzeugs gebracht werden und so die geringe Reibung zwischen der Schiene und dem Rad erhöht werden kann.

Solche Vorratsbehälter müssen regelmäßig wieder mit Sand befüllt werden. Dabei kann es sinnvoll sein, die Häufigkeit des Befüllvorgangs durch ein möglichst großes Vorratsvolumen zu reduzieren. Solche Vorratsbehälter haben je nach Einbauraum beziehungsweise Einbaulage im Schienenfahrzeug nicht immer einen direkten Zugang von der Behälteraußenseite. Hierzu weisen die Vorratsbehälter ohne direkten Zugang von der Außenseite im Regelfall einen rohrförmigen Einfüllstutzen auf, durch den Sand mittels einer Befüllvorrichtung in den Vorratsbehälter eingebracht, insbesondere eingeblasen, werden kann. Für die Anordnung und Ausgestaltung des Einfüllstutzens sind dabei zusätzlich verschiedene Vorgaben einzuhalten. Beispielsweise ist es erforderlich, den Einfüllstutzen auf einer ergonomischen Arbeitshöhe anzuordnen, damit Personal im Betriebswerk einfach Sand in den Vorratsbehälter einfüllen kann. Ferner kann es sinnvoll sein, den Einfüllstutzen mit einer nach unten gerichteten, also negativen, Steigung anzuordnen, damit während des Entfernens der Befüllvorrichtung aus dem Einfüllstutzen herausrieselnder Sand in den Vorratsbehälter rieselt und somit kein Sand außerhalb des Schienenfahrzeugs verbleibt, da dieser Sand außerhalb des Schienenfahrzeugs arbeitsaufwändig entfernt werden muss. Die Ausführung und Anordnung des Einfüllstutzens im Schienenfahrzeug kann somit einen maßgeblichen Einfluss auf das mögliche maximale Vorratsvolumen bei sonst gleichem Vorratsbehälter sowie dem betrieblichen Befüllaufwand darstellen.

In den meisten Schienenfahrzeugen ist der zur Verfügung stehende Bauraum, in dem der Vorratsbehälter angeordnet werden kann, jedoch durch weitere zahlreiche Randbedingungen zusätzlich eingeschränkt. Insbesondere ist dieser Bauraum im Regelfall entweder vollständig oberhalb oder vollständig unterhalb eines Fußbodens des Schienenfahrzeugs angeordnet. Da Schüttgüter und insbesondere Sand jedoch beim Befüllen und Entleeren des Vorratsbehälters einen Schüttwinkel, für Sand beispielsweise zweiunddreißig Grad, ausbilden, ist eine effiziente Ausnutzung des Bauraums erforderlich, um die Befüllmenge des Vorratsbehälters möglichst zu erhöhen.

Der Erfindung liegt die Aufgabe zugrunde, einen verbesserten Einfüllstutzen, einen Vorratsbehälter mit einem solchen verbesserten Einfüllstutzen sowie ein Schienenfahrzeug mit einem solchen Vorratsbehälter bereitzustellen sowie einen Befüllautomat.

Diese Aufgaben werden mit den Gegenständen der unabhängigen Patentansprüche gelöst. Vorteilhafte Weiterbildungen sind in den abhängigen Ansprüchen angegeben.

Ein Einfüllstutzen weist eine erste Öffnung, eine zweite Öffnung und einen zwischen der ersten Öffnung und der zweiten Öffnung liegenden Rohrabschnitt auf. Die erste Öffnung weist einen ersten Flächenschwerpunkt auf, die zweite Öffnung weist einen zweiten Flächenschwerpunkt auf. Der Einfüllstutzen ist derart an einem Vorratsbehälter anbringbar, dass die zweite Öffnung dem Vorratsbehälter zugewandt ist und die erste Öffnung vom Vorratsbehälter abgewandt ist. Ein Querschnitt des Rohrabschnitts wird von der ersten Öffnung zur zweiten Öffnung größer. Eine Mantellinie des Rohrabschnitts weist in einem unteren Bereich eine von einer Richtung einer Verbindungslinie zwischen dem ersten Flächenschwerpunkt und dem zweiten Flächenschwerpunkt abweichende Mantellinienrichtung und in einem oberen Bereich ein von der Richtung der Verbindungslinie abweichende Mantellinienrichtung auf. Dies kann insbesondere bedeuten, dass ein erster Querschnitt des Rohrabschnitts angrenzend an die erste Öffnung kleiner ist als ein zweiter Querschnitt des Rohrabschnitts angrenzend an die zweite Öffnung. Die Flächenschwerpunkte können auch als geometrische Schwerpunkte bezeichnet werden. Die Mantellinie kann dabei eine kürzeste Verbindung zwischen einer ersten Kurve, die die erste Öffnung definiert und einer zweiten Kurve, die die zweite Öffnung definiert, sein.

Dadurch dass der Querschnitt des Rohrabschnitts von der ersten Öffnung zur zweiten Öffnung größer wird, kann eine Befüllvorrichtung in den Einfüllstutzen eingebracht werden, wobei dies nicht in einer durch den Rohrabschnitt festgelegten Position erfolgen muss, sondern verschiedene Einsteckpositionen für die Befüllvorrichtung möglich sind, ohne die Befüllvorrichtung verändern zu müssen. Insbesondere kann die Befüllvorrichtung innerhalb des Einfüllstutzens verschoben beziehungsweise in ihrer Position geändert werden. Dadurch kann das Schüttgut flexibler in den Vorratsbehälter eingebracht werden, da beispielsweise an einer ersten Position ein erster Schüttgutkegel des Schüttguts in den Vorratsbehälter eingebracht werden kann und anschließend in einer zweiten Position ein zweiter Schüttgutkegel eingebracht werden kann, sodass das effizient in den Vorratsbehälter einzubringende Volumen des Schüttguts vergrößert werden kann.

In einer Ausführungsform wird der Querschnitt des Rohrabschnitts von der ersten Öffnung zur zweiten Öffnung bei gleichbleibender Querschnittsänderung größer.

In einer Ausführungsform des Einfüllstutzens kann eine Befüllvorrichtung derart in den Einfüllstutzen eingesteckt werden, dass die Befüllvorrichtung zumindest eine erste Einsteckposition und eine zweite Einsteckposition einnehmen kann. Dabei kann vorgesehen sein, dass die Befüllvorrichtung in der ersten Einsteckposition höher angeordnet ist als in der zweiten Einsteckposition. Gegebenenfalls kann die die Befüllvorrichtung in der ersten Einsteckposition höher angeordnet sein als in einer senkrecht zu einer Seitenwand eines Schienenfahrzeugs angeordneten Einsteckposition. Dadurch kann die in den Vorratsbehälter einbringbare Menge bzw. das einbringbare Volumen des Schüttguts vergrößert werden. Insbesondere kann der Einfüllstutzen in einem oberen Bereich relativ zur Seitenwand eine positive Steigung aufweisen. In der zweiten Einsteckposition ist die Befüllvorrichtung nach unten geneigt. Das bedeutet, dass der Einfüllstutzen eine zu einer Ebene durch beide Schienenoberkanten negative Steigung aufweist und insbesondere ein Teil der zweiten Öffnung unterhalb der ersten Öffnung angeordnet ist. Die Befüllvorrichtung kann dann zum Abschließen des Befüllvorgangs beim Herausziehen der Befüllvorrichtung aus dem Einfüllstutzen etwa nach unten geneigt werden, sodass ausrieselnder Sand weiter in den Vorratsbehälter zurückrieseln kann und sich nicht aus dem Einfüllstutzen entfernt.

In einer Ausführungsform ist die erste Öffnung kreisförmig und eine erste Dichtung an der ersten Öffnung angeordnet. Diese erste Dichtung an der ersten Öffnung kann dazu dienen, die Befüllvorrichtung gegen den Einfüllstutzen abzudichten, sodass auch in der ersten Einsteckposition bzw. in weiteren Einsteckpositionen, in denen die Befüllvorrichtung gegebenenfalls nach oben geneigt ist, Sand nicht aus dem Einfüllstutzen herausrieseln kann, da die erste Öffnung durch die Befüllvorrichtung verschlossen wird und mittels erster Dichtung abgedichtet. Dies ermöglicht eine weitere Verbesserung und Effizienzsteigerung des Befüllvorgangs. Es kann vorgesehen sein, die erste Dichtung als ersten O-Ring auszugestalten.

In einer Ausführungsform weist der Einfüllstutzen ferner eine Verschlussklappe auf. Die Verschlussklappe liegt im geschlossenen Zustand an der ersten Dichtung an. Mittels der Verschlussklappe kann also der Einfüllstutzen verschlossen werden und sanddicht ausgestaltet. Dadurch kann während einer Fahrt des Schienenfahrzeugs Sand nicht aus dem Schienenfahrzeug gelangen.

In einer Ausführungsform ist die zweite Öffnung oval. Die zweite Öffnung setzt sich dabei aus zwei Halbkreisbögen und zwei Geraden zusammen. Dabei kann beispielsweise vorgesehen sein, dass einer der beiden Halbkreisbögen unterhalb der ersten Öffnung und der andere Halbkreisbogen oberhalb der ersten Öffnung angeordnet ist. Eine Befüllvorrichtung kann dann zum Auffüllen mit Schüttgut anliegend am oben liegenden Kreisbogen in den Einfüllstutzen eingesetzt werden und anschließend bei oder vor dem Herausziehen an den unteren Kreisbogen angelegt werden. Somit kann zunächst das größtmögliche Schüttgutvolumen in den Vorratsbehälter eingebracht werden, wobei beim anschließenden Herausziehen ein Rieseln des Sandes aus dem Vorratsbehälter bzw. aus dem Einfüllstutzen vermieden werden kann. Ein Radius der Halbkreisbögen kann dabei dem Radius der ersten Öffnung entsprechen. Ferner ist es auch möglich, dass ein Radius der Halbkreisbögen größer ist als ein Radius der ersten Öffnung.

In einer Ausführungsform ist die zweite Öffnung kreisförmig und der Rohrabschnitt kegelstumpfförmig. Das bedeutet, dass der Radius der zweiten Öffnung größer ist als der Radius der ersten Öffnung. Auch dies ermöglicht es, das Schüttgut in einer möglichst hohen Position in den Vorratsbehälter einzubringen und beim Herausziehen der Befüllvorrichtung aus dem Einfüllstutzen die Befüllvorrichtung nach unten zu neigen und so ein Zurückrieseln des Sands aus dem Vorratsbehälter zu vermeiden. Der Kegelstumpf kann dabei ein gerader Kegelstumpf sein, sodass die erste Öffnung und die zweite Öffnung einen identischen bzw. übereinanderliegenden Mittelpunkt aufweisen. Alternativ kann auch vorgesehen sein, dass der Kegelstumpf schief ist.

In einer Ausführungsform weist die Mantelfläche des Rohrabschnitts im unteren Bereich ein Gefälle von mindestens zwei Grad und insbesondere von mindestens drei Grad auf. Mit einem solchen Gefälle kann erreicht werden, dass Sand, der während des Herausziehens der Befüllvorrichtung aus dem Einfüllstutzen aus der Befüllvorrichtung herausrieselt, trotzdem weiter Richtung Vorratsbehälter bewegt wird und somit nicht aus dem Einfüllstutzen herausrieselt. Das Gefälle kann dabei auf eine Ebene durch beide Schienenoberkanten und/oder auf eine Außenwand des Vorratsbehälters bezogen sein.

In einer Ausführungsform weist die Mantelfläche des Rohrabschnitts im oberen Bereich eine Steigung von mindestens fünf und insbesondere von mindestens zehn Grad auf. Somit kann eine möglichst hohe Position der Befüllvorrichtung während des Befüllvorgangs erreicht werden.

Selbstverständlich können das Gefälle und die Steigung des Rohrabschnitts im unteren bzw. oberen Bereich betragsmäßig identisch sein. Beispielsweise ist also auch ein Einfüllstutzen denkbar, bei dem sowohl das Gefälle als auch die Steigung mindestens fünf und insbesondere mindestens zehn Grad beträgt.

In einer Ausführungsform weist der Einfüllstutzen ferner eine Einbaumulde auf, wobei die erste Öffnung in der Einbaumulde angeordnet ist. Die Einbaumulde umfasst dabei eine Vertiefung, die mit einer Außenwand eines Schienenfahrzeugs derart verbunden werden kann, dass die Vertiefung eine Vertiefung der Außenwand des Schienenfahrzeugs darstellt. Eine solche Vertiefung kann dann beispielsweise mit der bereits erwähnten Verschlussklappe derart verschlossen sein, dass die Verschlussklappe bündig mit der Außenwand des Schienenfahrzeugs abschließt.

In einer Ausführungsform weist der Einfüllstutzen ferner ein entnehmbares Befüllelement auf, wobei das Befüllelement einen in den Rohrabschnitt einsteckbaren Abschnitt und eine Einfüllöffnung aufweist. Die Einfüllöffnung ist mit dem Abschnitt verbunden und weist einen größeren Querschnitt auf als die erste Öffnung. Ein solches Befüllelement kann beispielsweise zum manuellen Befüllen des Vorratsbehälters verwendet werden, indem das Befüllelement in den Einfüllstutzen eingesteckt wird und beispielsweise ein Triebfahrzeugführer eines Schienenfahrzeugs Sand von außen in die Einfüllöffnung einfüllen kann. Dadurch kann beispielsweise die bei aktuellen Straßenbahnen vorgesehene Befüllung von Sandbehältern im Inneren des Fahrzeugs vermieden werden und somit eine Verschmutzung des Fahrzeuginneren mit Sand reduziert werden.

Die Erfindung umfasst ferner einen Vorratsbehälter mit einem erfindungsgemäßen Einfüllstutzen.

Darüber hinaus umfasst die Erfindung einen Vorratsbehälter mit einem Einfüllstutzen, bei dem eine Befüllvorrichtung derart in den Einfüllstutzen eingesteckt werden kann, dass die Befüllvorrichtung zumindest eine erste Einsteckposition und eine zweite Einsteckposition einnehmen kann, wobei die Befüllvorrichtung in der zweiten Einsteckposition nach unten geneigt ist. Der Vorratsbehälter ist derart ausgestaltet, dass ein mittels der Befüllvorrichtung angeordnet in der ersten Einsteckposition eingebrachtes Schüttgut innerhalb des Vorratsbehälters einen Schüttgutkegel ausbilden kann und ein Volumen des Schüttgutkegels derart ist, dass bei einer gleichmäßigen Verteilung des Schüttguts im Vorratsbehälter ein Füllstand des Schüttguts unterhalb der ersten Öffnung ist. Die gleichmäßige Verteilung des Schüttguts innerhalb des Vorratsbehälters kann beispielsweise dadurch erreicht werden, dass das Schienenfahrzeug bewegt wird und beim Bremsen bzw. Beschleunigen des Schienenfahrzeugs Kräfte auf das Schüttgut wirken, sodass sich dieses im Vorratsbehälter verteilt. Dabei können der Vorratsbehälter und der Einfüllstutzen so ausgelegt werden, dass der Schüttkegel genau das Volumen umfasst, welches ohne Herauszurieseln unterhalb der ersten Öffnung innerhalb des Vorratsbehälters angeordnet sein kann und somit eine besonders vorteilhafte Raumausnutzung innerhalb des Vorratsbehälters erreicht werden kann.

Die Erfindung umfasst ferner ein Schienenfahrzeug mit einem erfindungsgemäßen Vorratsbehälter.

Die Erfindung betrifft ferner einen Befüllautomat zum Befüllen eines Vorratsbehälters eines Schienenfahrzeugs, aufweisend eine Befüllvorrichtung und einen Antrieb. Der Antrieb ist eingerichtet, eine Spitze der Befüllvorrichtung während eines Befüllvorgangs auf einer vorgegebenen Bewegungsbahn zu bewegen. Die vorgegebene Bewegungsbahn kann dabei insbesondere anhand einer Geometrie eines Einfüllstutzens des Vorratsbehälters und des Vorratsbehälters definiert sein.

Die oben beschriebenen Eigenschaften, Merkmale und Vorteile dieser Erfindung sowie die Art und Weise, wie diese erreicht werden, werden klarer und deutlicher verständlich durch die Erläuterungen der folgenden, stark vereinfachten, schematischen Darstellungen bevorzugter Ausführungsbeispiele. Hierbei zeigen in jeweils schematisierter Darstellung:
FIG 1 einen Querschnitt durch einen Vorratsbehälter mit Einfüllstutzen;
FIG 2 einen weiteren Querschnitt durch den Vorratsbehälter der FIG 1;
FIG 3 eine erste Befestigungsmöglichkeit für einen Einfüllstutzen an einem Vorratsbehälter;
FIG 4 eine zweite Befestigungsmöglichkeit für einen Einfüllstutzen an einem Vorratsbehälter;
FIG 5 einen Querschnitt durch einen Vorratsbehälter mit einem weiteren Einfüllstutzen;
FIG 6 eine Draufsicht auf einen weiteren Einfüllstutzen;
FIG 7 einen Querschnitt durch den weiteren Einfüllstutzen der FIG 6;
FIG 8 eine Draufsicht auf einen weiteren Einfüllstutzen;
FIG 9 einen Querschnitt durch einen weiteren Vorratsbehälter mit Einfüllstutzen; und
FIG 10 einen Querschnitt durch ein Schienenfahrzeug.

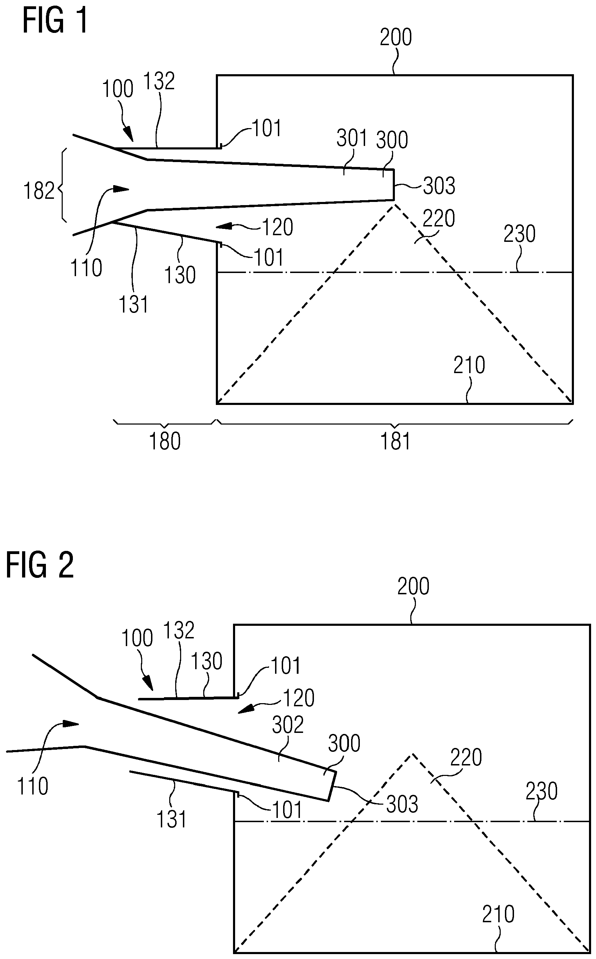

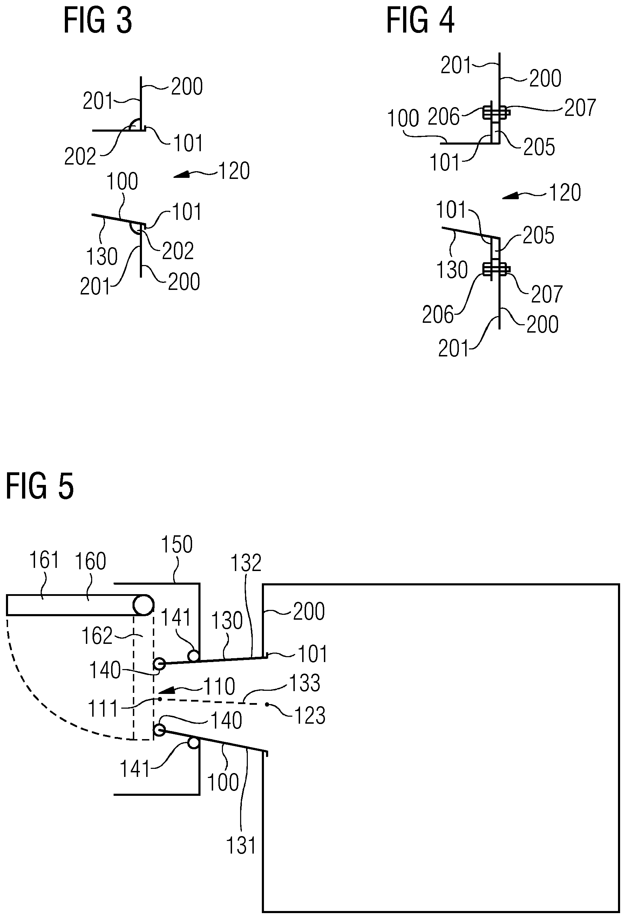

FIG 1 zeigt einen Einfüllstutzen 100 mit einer ersten Öffnung 110 und einer zweiten Öffnung 120. Zwischen der ersten Öffnung 110 und der zweiten Öffnung 120 liegt ein Rohrabschnitt 130 des Einfüllstutzens 100. Die erste Öffnung 110 weist einen ersten Flächenschwerpunkt auf. Die zweite Öffnung 120 weist einen zweiten Flächenschwerpunkt auf. Ferner ist in FIG 1 ein Vorratsbehälter 200 gezeigt, wobei der Einfüllstutzen 100 am Vorratsbehälter 200 anbringbar und in der Darstellung der FIG 1 insbesondere am Vorratsbehälter 200 angebracht ist. Dies ist derart ausgestaltet, dass die zweite Öffnung 120 dem Vorratsbehälter 200 zugewandt und die erste Öffnung 110 vom Vorratsbehälter 200 abgewandt ist. Ein Querschnitt des Rohrabschnitts 130 wird von der ersten Öffnung 110 zur zweiten Öffnung 120 größer. Eine Mantelline des Rohrabschnitts 130 weist in einem unteren Bereich 131 eine von einer Richtung einer Verbindungslinie zwischen dem ersten Flächenschwerpunkt und dem zweiten Flächenschwerpunkt abweichende Mantellinienrichtung auf. In einem oberen Bereich 132 weist die Mantelfläche des Rohrabschnitts 130 ebenfalls eine von der Richtung der Verbindungslinie abweichende Mantellinienrichtung auf. Es kann vorgesehen sein, dass der Querschnitt des Rohrabschnitts 130 von der ersten Öffnung 110 zur zweiten Öffnung 120 bei gleichbleibender Querschnittsänderung größer wird, wie als Option in FIG 1 gezeigt. Hinsichtlich der Flächenschwerpunkte und der Verbindungslinie wird auf die nachfolgend gezeigte FIG 5 verwiesen.

Mit einem solchen Einfüllstutzen 100 kann ein Schüttgut wie beispielsweise Sand in den Vorratsbehälter 200 eingebracht werden. Hierzu ist in FIG 1 eine Befüllvorrichtung 300 dargestellt. Die Befüllvorrichtung 300 kann durch den Einfüllstutzen 100 in den Vorratsbehälter 200 eingeführt werden, und anschließend kann ein Schüttgut durch die Befüllvorrichtung 300 eingebracht, beispielsweise eingeblasen, werden.

Dadurch dass der Querschnitt des Rohrabschnitts 130 von der ersten Öffnung 110 zur zweiten Öffnung 120 größer wird, sind verschiedene Befüllpositionen für die Befüllvorrichtung 300 denkbar. Die Befüllvorrichtung 300 ist in einer ersten Einsteckposition 301 angeordnet.

Außerdem in FIG 1 dargestellt ist, dass der Einfüllstutzen 100 optional einen Befestigungsrand 101 aufweist, wobei der Befestigungsrand 101 auf der Seite der zweiten Öffnung 120 des Einfüllstutzens 100 angeordnet ist und der Befestigungsrand 101 mit dem Vorratsbehälter 200 verbindbar ist.

FIG 2 zeigt einen Querschnitt durch den Einfüllstutzen 100 und den Vorratsbehälter 200 der FIG 1. In dieser Darstellung ist die Befüllvorrichtung 300 in einer zweiten Einsteckposition 302 angeordnet, wobei sich die zweite Einsteckposition 302 von der ersten Einsteckposition 301 unterscheidet. Eine Spitze 303 der Befüllvorrichtung 300 liegt in der zweiten Einsteckposition 302 tiefer als in der ersten Einsteckposition 301. Ferner kann vorgesehen sein, wie in FIG 2 dargestellt, dass die Spitze 303 der Befüllvorrichtung in der zweiten Einsteckposition 302 in Richtung des Einfüllstutzens 100 verschoben ist, verglichen mit der ersten Einfüllposition 301 wie in FIG 1 gezeigt.

Optional in FIG 2 dargestellt ist, dass die Befüllvorrichtung 300 in der zweite Einsteckposition 302 nach unten geneigt ist. Nach unten geneigt bedeutet in diesem Zusammenhang eine Neigung der Befüllvorrichtung 300 nach unten verglichen beispielsweise mit einem Boden 210 des Vorratsbehälters 200 oder, wenn der Vorratsbehälter 200 in ein Schienenfahrzeug eingebaut ist, bezogen auf die Ebene durch beide Schienenoberkanten bzw. einen Fußboden des Schienenfahrzeugs. Ferner kann die Neigung auch auf eine Normale einer Seitenwand des Schienenfahrzeugs bezogen sein.

Soll der Vorratsbehälter 200 der FIG 1 und 2 mit einem Schüttgut wie beispielsweise Sand befüllt werden, kann zunächst die Befüllvorrichtung 300 derart wie in FIG 1 gezeigt in den Einfüllstutzen 100 eingesteckt werden. Das Schüttgut, also beispielsweise der Sand, kann dann durch die Befüllvorrichtung 300 geführt werden und bildet im Inneren des Vorratsbehälters 200 einen Schüttgutkegel 220 aus. Um das Volumen des Schüttgutkegels 220 möglichst groß werden zu lassen, ist es vorteilhaft, die erste Einsteckposition 301 derart zu wählen, dass die Spitze 303 der Befüllvorrichtung 300 möglichst weit oben liegt. Dies kann durch die Ausgestaltung des Einfüllstutzens 100 dadurch erreicht werden, dass der Querschnitt des Rohrabschnitts 130 zur zweiten Öffnung 120 hin größer wird. Insbesondere kann vorgesehen sein, dass sich die erste Einsteckposition 301 und die zweite Einsteckposition 302 hinsichtlich der Anordnung der Befüllvorrichtung 300 an der ersten Öffnung 110 nicht wesentlich ändern oder nur in Bezug auf ein Herausziehen der Befüllvorrichtung 300 aus dem Einfüllstutzen 100 verändert sind, während durch den sich ändernden Querschnitt des Rohrabschnitts 130 die Spitze 303 in der ersten Einsteckposition 301 deutlich höher liegt als in der zweiten Einsteckposition 302. Ist der Schüttgutkegel 220 vollständig ausgebildet, kann nun die Befüllvorrichtung 300 in die zweite Einsteckposition 302 überführt werden und anschließend die Befüllvorrichtung 300 wieder aus dem Vorratsbehälter 200 bzw. dem Einfüllstutzen 100 entfernt werden. Sollte während dieses Vorgangs Sand aus der Befüllvorrichtung 300 rieseln, so wird dieser aufgrund der Neigung nach unten in den Vorratsbehälter 200 rieseln, selbst wenn der Sand erst dann aus der Befüllvorrichtung 300 rieseln sollte, wenn die Befüllvorrichtung 300 mit der Spitze 303 bereits durch den Einfüllstutzen 100 geführt wird. Dies kann insbesondere dadurch unterstützt werden, dass die Mantelfläche des Rohrabschnitts 130 im unteren Bereich 131 ein Gefälle aufweist wie in der Darstellung der FIGN 1 und 2 angedeutet. Sand oder ein anderes Schüttgut rieselt dann aufgrund des Gefälles des unteren Bereichs 131 des Rohrabschnitts 130 zurück in den Vorratsbehälter 200.

In FIG 1 und 2 ist ferner dargestellt, dass das mittels des Schüttgutkegels 220 eingebrachte Schüttgut nach einer Bewegung des Vorratsbehälters 200 gleichmäßig verteilt werden kann und dann ein Füllstand 230 des Schüttguts innerhalb des Vorratsbehälters 200 erreicht werden kann. Es kann vorgesehen sein, dass der Füllstand 230 dann unterhalb der ersten Öffnung 110 liegt, wie beispielsweise in FIG 2 angedeutet. Insbesondere kann eine Spitze 303 des Schüttgutkegels 220 oberhalb der ersten Öffnung 110 liegen, während der Füllstand 230 unterhalb der ersten Öffnung 110 liegt. So kann eine möglichst gute Raumausnutzung innerhalb des Vorratsbehälters 200 erreicht werden.

Alternativ zur Darstellung der FIG 1 und 2 könnte ebenfalls vorgesehen sein, dass die Befüllvorrichtung 300 in der ersten Einsteckposition 301 bzw. der zweiten Einsteckposition 302 anders angeordnet ist und beispielsweise die Mantelfläche des Rohrabschnitts 130 im unteren Bereich 131 kein Gefälle aufweist. In diesem Fall wäre die Befüllvorrichtung 300 in der ersten Einsteckposition 301 nicht nach unten geneigt.

Optional kann vorgesehen sein, dass das Gefälle der Mantelfläche des Rohrabschnitts 130 im unteren Bereich 131 mindestens zwei Grad, mindestens drei Grad oder insbesondere mindestens fünf Grad beträgt.

Der Rohrabschnitt 130 weist ferner den oberen Bereich 132 der Mantelfläche des Rohrabschnitts 130 auf, wobei vorgesehen sein kann, dass alternativ zu der Darstellung der FIGN 1 und 2 der obere Bereich 132 der Mantelfläche des Rohrabschnitts 130 eine Steigung aufweist und dass das Gefälle im unteren Bereich 131 und die Steigung im oberen Bereich 132 betragsmäßig identisch sind. Ferner können das Gefälle im unteren Bereich 131 und die Steigung im oberen Bereich 132 auch betragsmäßig unterschiedlich sein.

Es kann vorgesehen sein, dass eine Einfüllstutzentiefe 180 beispielsweise im Bereich von neunzig Millimetern liegt. Eine Vorratsbehältertiefe 181 kann beispielsweise sechshundertfünfzig Millimeter betragen. Eine Behälterbreite senkrecht zur Vorratsbehältertiefe 181, in der Darstellung in FIG 1 also in die Zeichenebene hinein, kann beispielsweise fünfhundert Millimeter betragen. Ein Durchmesser 182 der ersten Öffnung 110 kann beispielsweise fünfzig Millimeter betragen. Ist ein Gefälle des unteren Bereichs 131 der Mantelfläche des Rohrabschnitts 130 und eine Steigung des oberen Bereichs 132 der Mantelfläche des Rohrabschnitts 130 jeweils zehn Grad und beträgt eine Länge einer Befüllvorrichtung 300 beispielsweise dreihundertsechzig Millimeter, kann bei einem Schüttwinkel des Schüttgutkegels 220 von zweiunddreißig Grad beispielsweise eine verbesserte Ausnutzung des Volumens von über 7 Liter zusätzlichem Sandvolumen des Vorratsbehälters 200 erreicht werden.

FIG 3 zeigt einen Querschnitt durch einen Bereich, in dem der Einfüllstutzen 100 in den Vorratsbehälter 200 übergeht. Im Bereich des Befestigungsabschnitts 101 des Einfüllstutzens 100 ist ferner eine Außenwand 201 des Vorratsbehälters 200 angeordnet. Der Befestigungsrand 101 ist mit der Außenwand 201 mittels Schweißverbindung 202 verbunden. Der Einfüllstutzen 100 ist in diesem Ausführungsbeispiel also in den Vorratsbehälter 200 eingeschweißt, und durch die Schweißnaht wird eine dichte Verbindung zwischen Vorratsbehälter 200 und Einfüllstutzen 100 erreicht.

Die Schweißverbindung 202 kann umlaufend um die zweite Öffnung 120 geführt sein.

FIG 4 zeigt einen Querschnitt durch eine alternative Befestigung des Einfüllstutzens 100 am Vorratsbehälter 200. In diesem Ausführungsbeispiel ist zwischen dem Befestigungsabschnitt 101 des Einfüllstutzens 100 und der Außenwand 201 des Vorratsbehälters 200 eine Dichtung 205 angeordnet und ferner der Einfüllstutzen 100 mit dem Vorratsbehälter 200 mittels Schraubverbindung verschraubt. Die Schraubverbindung wird dabei durch eine Schraube 206 und eine Blindniete 207 ausgebildet. Die Dichtung 205 kann dabei um die zweite Öffnung 120 umlaufend angeordnet sein und somit eine Abdichtung zwischen Vorratsbehälter 200 und Einfüllstutzen 100 erreicht werden.

In FIG 4 ist dargestellt, dass der Befestigungsrand 101 außen an der Außenwand 201 des Vorratsbehälters 200 angebracht ist, im Gegensatz zu den Darstellungen der FIGN 1 bis 3. Es kann jedoch bei allen Ausgestaltungen und Ausführungsbeispielen vorgesehen sein, dass der Befestigungsrand 101 außen an der Außenwand 201 oder innen an der Außenwand 201 angeordnet ist, die Darstellungen der FIGN sollen nicht auf die jeweilige Ausgestaltung eingeschränkt sein.

FIG 5 zeigt einen Querschnitt durch einen Vorratsbehälter 200 mit Einfüllstutzen 100, der der Ausgestaltung der FIGN 1 und 2 entspricht, sofern im Folgenden keine Unterschiede beschrieben sind. An der ersten Öffnung 110 ist eine erste Dichtung 140 angeordnet. Der ersten Dichtung 140 kann dabei dazu dienen, die erste Öffnung 110 gegenüber einer eingesetzten Befüllvorrichtung 300, wie beispielsweise in den FIGN 1 und 2 gezeigt, abzudichten. Ferner kann vorgesehen sein, dass die erste Öffnung 110 kreisförmig ausgestaltet ist. Dies ist insbesondere dann sinnvoll, wenn auch die Befüllvorrichtung 300 einen runden Querschnitt aufweist. Optional in FIG 5 dargestellt ist, dass die erste Dichtung 140 als erster O-Ring ausgestaltet ist.

Ferner ist in FIG 5 der erste Flächenschwerpunkt 111, der zweite Flächenschwerpunkt 123 und die Verbindungslinie 133 eingezeichnet, die so auch für die weiteren FIGN ausgestaltet sein können. Insbesondere ist in FIG 5 dargestellt, dass die Verbindungslinie 133 aufgrund unterschiedlicher Abstände des ersten Flächenschwerpunkts 111 und zweiten Flächenschwerpunkts 123 zu einem Boden 210 des Vorratsbehälters 200 nach unten geneigt sein kann.

Optional ist in FIG 5 ferner eine Einbaumulde 150 gezeigt. Die erste Öffnung 110 ist dabei innerhalb der Einbaumulde 150 angeordnet. Es kann vorgesehen sein, dass die Einbaumulde 150 mit einer Außenwand eines Schienenfahrzeugs verbunden wird und somit die Einbaumulde 150 eine Außenwand des Schienenfahrzeugs entsprechend unterbrechen kann.

Ferner ist in FIG 5 optional dargestellt, dass innerhalb der Einbaumulde 150 eine Verschlussklappe 160 angeordnet ist. Die Verschlussklappe 160 ist in einem geöffneten Zustand 161 gezeigt. Gestrichelt angedeutet ist die Verschlussklappe 160 in einem geschlossenen Zustand 162. Es kann vorgesehen sein, dass die Verschlussklappe 160 im geschlossenen Zustand 162 an der ersten Dichtung 140 anliegt. In diesem Fall kann der Vorratsbehälter 200 mittels Verschlussklappe 160 abgedichtet werden. Ist die Einbaumulde 150 vorgesehen, so kann die Verschlussklappe 160 derart angeordnet sein, dass die Verschlussklappe 160 im geschlossenen Zustand 162 bündig mit der Einbaumulde 150 abschließt und somit die Verschlussklappe 160 im geschlossenen Zustand 162 einen Teil einer Außenwand eines Schienenfahrzeugs bildet.

Ferner ist in FIG 5 optional dargestellt, dass die Einbaumulde 150 gegenüber dem Rohrabschnitt 130 des Einfüllstutzens 100 mit einer zweiten Dichtung 141 abgedichtet sein kann. Ebenfalls ist in FIG 5 dargestellt, dass die zweite Dichtung 141 optional als zweiter O-Ring ausgestaltet sein kann.

Der in Zusammenhang mit der FIG 5 gezeigte Einfüllstutzen 100 kann analog zu den FIGN 3 und 4 mit dem Vorratsbehälter 200 verbunden sein. Die Dichtung 205 kann dabei insbesondere als dritte Dichtung umlaufend um die zweite Öffnung 120 und optional als dritter O-Ring ausgestaltet sein.

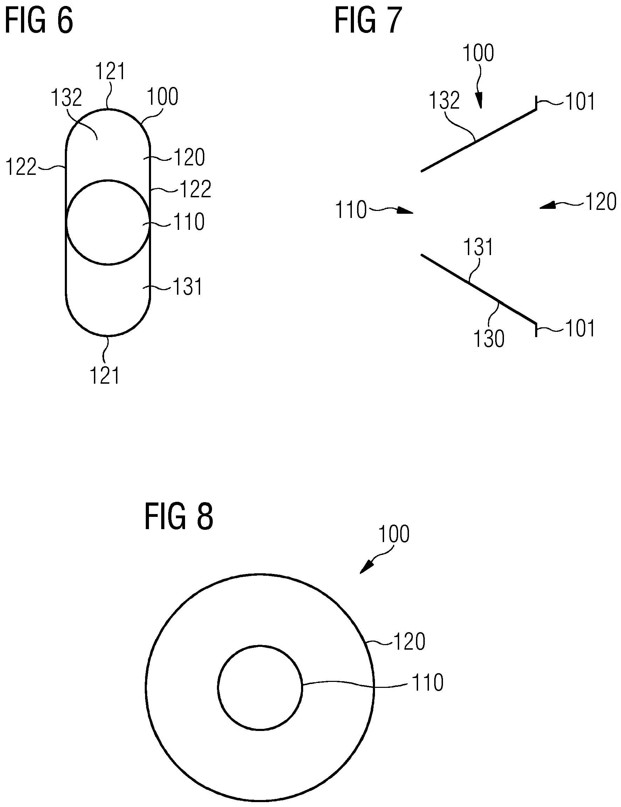

FIG 6 zeigt eine Draufsicht auf einen Einfüllstutzen 100 insbesondere von einem Inneren des Vorratsbehälters 200 aus gesehen. Die zweite Öffnung 120 ist in diesem Ausführungsbeispiel oval und aus zwei Halbkreisbögen 121 und zwei Geraden 122 zusammengesetzt. Prinzipiell kann der Einfüllstutzen 100 der FIGN 1, 2 und 5 derart ausgestaltet sein, dass im Gegensatz zu den Einfüllstutzen 100 der FIGN 1, 2 und 5 beim Einfüllstutzen 100 der FIG 6 das Gefälle des unteren Bereichs 131 und die Steigung des oberen Bereichs 132 betragsmäßig identisch zueinander sind. Eine solche Ausgestaltung ermöglicht, den Schüttgutkegel 220 mit einem möglichst großen Volumen im Vorratsbehälter 200 zu verwirklichen und gleichzeitig beim Entfernen einer Befüllvorrichtung 300 ein Herausrieseln des Schüttguts zu vermeiden.

FIG 7 zeigt einen Querschnitt durch einen Einfüllstutzen 100, der wie in FIG 6 gezeigt ausgestaltet ist. Dabei kann vorgesehen sein, dass eine Mantelfläche des Rohrabschnitts 130 im oberen Bereich 132 eine Steigung größer als die einer Normalen auf der Seitenwand an der Einsteckposition, insbesondere von mindestens fünf Grad und bevorzugt von mindestens zehn Grad aufweist. Das Gefälle im unteren Bereich 131 der Mantelfläche des Rohrabschnitts 130 kann entsprechend ausgestaltet sein.

FIG 8 zeigt eine weitere Draufsicht auf einen Einfüllstutzen 100, bei dem auch die zweite Öffnung 120 kreisförmig ist und bei dem der Rohrabschnitt 130 kegelstumpfförmig ist. In der Darstellung der FIG 8 sind dabei die erste Öffnung 110 und die zweite Öffnung 120 konzentrisch zueinander angeordnet und damit der Kegelstumpf des Rohrabschnitts 130 ein gerader Kegelstumpf. Es kann jedoch auch vorgesehen sein, die erste Öffnung 110 und die zweite Öffnung 120 im Gegensatz zur Darstellung der FIG 8 nicht konzentrisch auszugestalten. Mittels dieser Ausgestaltung des Einfüllstutzens 100 kann zusätzlich eine verbesserte Verteilung des Schüttguts im Vorratsbehälter 200 erreicht werden. Zunächst kann dabei die Befüllvorrichtung 300 in den Einfüllstutzen 100 eingesetzt werden und auf einer der Kante der zweiten Öffnung 120 des Einfüllstutzen 100 folgenden Ellipsenbahn von links nach rechts oder umgekehrt bewegt werden. Dabei können mindestens mehr als zwei Einsteckpositionen 301, 302 angesteuert werden und insbesondere auch ein maximales Volumen durch eine kontinuierliche Bewegung auf der Ellipsenbahn von links nach rechts oder rechts nach links mit Positionswechsel bei gleicher Position der Spitze des Schüttgutkegels 220 und der Spitze 303 der Befüllvorrichtung 300. Dabei kann vorgesehen sein, dass die Spitze 303 der Befüllvorrichtung 300 während der kontinuierlichen Bewegung auf der Ellipsenbahn die erste Einsteckposition 301 durchläuft. Alternativ kann vorgesehen sein, die Befüllvorrichtung 300 analog zur Darstellung der FIG 2 möglichst weit nach oben zu bringen, um eine möglichst große Höhe des Schüttgutkegels 220 zu erreichen. Dies kann insbesondere durch Bewegen der Befüllvorrichtung 300 in die erste Einsteckposition 301 erfolgen. Beim Herausziehen der Befüllvorrichtung 300 aus dem Vorratsbehälter 200 kann insbesondere die zweite Einsteckposition 302 der FIG 2 eingenommen werden.

Ein Querschnitt durch den Einfüllstutzen 100 der FIG 8 kann dabei analog zur Darstellung der FIG 7 sein. Ferner kann auch dieser Einfüllstutzen 100 die im Zusammenhang mit FIG 7 erläuterten Steigungen aufweisen.

Ebenso kann vorgesehen sein, dass die im Zusammenhang mit den FIGN 6 bis 8 erläuterten Einfüllstutzen 100 im unteren Bereich 131 ein Gefälle von mindestens zwei und im oberen Bereich 132 eine Steigung von mindestens fünf Grad aufweisen. Die Steigung kann dabei insbesondere größer als die Steigung einer Normalen bezogen auf die Seitenwand an der Einsteckposition sein. Das Gefälle kann ferner mindestens drei Grad betragen und auf eine Ebene durch beide Schienenoberkanten und/oder auf eine Außenwand des Vorratsbehälters bezogen sein.

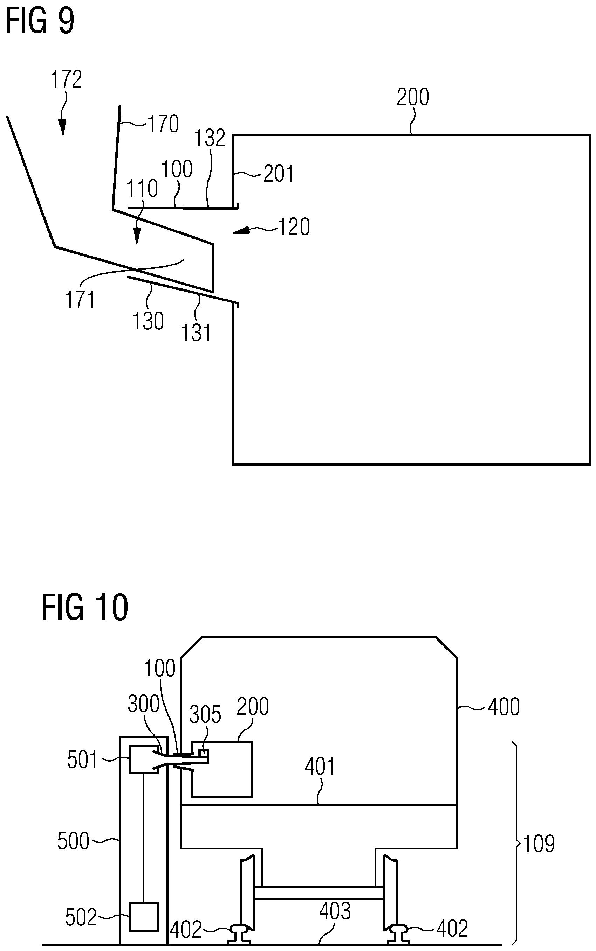

FIG 9 zeigt einen Querschnitt durch einen Vorratsbehälter 200 mit Einfüllstutzen 100, der wie in Zusammenhang mit den FIGN 1, 2 oder 5 erläutert ausgestaltet ist. Alternativ kann der Einfüllstutzen 100 auch analog zu den im Zusammenhang mit den FIGN 6 bis 8 erläuterten Merkmalen ausgestaltet sein. Der Einfüllstutzen 100 weist ferner ein entnehmbares Befüllelement 170 auf, wobei das Befüllelement 170 einen in den Rohrabschnitt 130 einsteckbaren Abschnitt 171 und eine Einfüllöffnung 172 aufweist. Die Einfüllöffnung 172 ist mit dem Abschnitt 171 verbunden und weist einen größeren Querschnitt auf als die erste Öffnung 110. Das Befüllelement 170 kann zum händischen Nachfüllen von Sand in den Vorratsbehälter 200, beispielsweise an der Endhaltestelle einer Straßenbahnlinie, durch den Triebfahrzeugführer dienen. Dadurch dass die Einfüllöffnung 172 größer ist als die erste Öffnung 110, kann Sand einfach nachgefüllt werden. Dies ist insbesondere dann vorteilhaft, wenn ein Nachfüllen des Vorratsbehälters 200 von einem Inneren eines Schienenfahrzeugs aus vermieden werden soll.

FIG 10 zeigt einen Querschnitt durch ein Schienenfahrzeug 400 mit einem Vorratsbehälter 200 mit Einfüllstutzen 100. Der Vorratsbehälter 200 bzw. der Einfüllstutzen 100 können dabei wie im Zusammenhang mit den FIGN 1 bis 9 erläutert ausgestaltet sein. Der Vorratsbehälter 200 ist dabei vollständig über einem Fußboden 401 des Schienenfahrzeugs 400 angeordnet. In einem alternativen, nicht gezeigten Ausführungsbeispiel kann der Vorratsbehälter 200 auch vollständig unterhalb des Fußbodens 401 des Schienenfahrzeugs 400 angeordnet sein. Eine Höhe 109 des Einfüllstutzens 100 kann dabei bezogen auf einen umliegenden Bereich bzw. bezogen auf die Schienen 402 derart angeordnet sein, dass ein angenehmes Arbeiten für Personal in einem Betriebswerk möglich ist und der Einfüllstutzen 100 beispielsweise zwischen einem Meter und 1,60 Meter oberhalb eines Gleisbettes 403 angeordnet ist.

Ebenfalls in FIG 10 dargestellt ist ein Befüllautomat 500, wobei der Befüllautomat 500 die Befüllvorrichtung 300 und zumindest einen Antrieb 501 aufweist. Der Antrieb 501 ist eingerichtet, die Spitze 303 der Befüllvorrichtung 300 während eines Befüllvorgangs auf einer vorgegebenen Bewegungsbahn zu bewegen. Die vorgegebene Bewegungsbahn kann dabei insbesondere anhand einer Geometrie des Einfüllstutzens 100 des Vorratsbehälters 200 und des Vorratsbehälters 200 definiert sein.

Die Bewegungsbahn kann beispielsweise die im Zusammenhang mit FIG 8 erläuterte Bewegung umfassen. Dann wird zunächst die Befüllvorrichtung 300 in den Einfüllstutzen 100 eingesetzt und auf einer der Kante der zweiten Öffnung 120 des Einfüllstutzen 100 folgenden Ellipsenbahn von links nach rechts oder umgekehrt bewegt. Dabei können mehrere Einsteckpositionen angesteuert werden und insbesondere auch ein maximales Volumen durch eine kontinuierliche Bewegung auf der Ellipsenbahn von links nach rechts oder rechts nach links mit Positionswechsel bei gleicher Position der Spitze des Schüttgutkegels 220 und der Spitze 303 der Befüllvorrichtung 300 erreicht werden. Beim Herausziehen der Befüllvorrichtung 300 aus dem Vorratsbehälter 200 kann insbesondere die zweite Einsteckposition 302 der FIG 2 eingenommen werden.

Der Antrieb 501 kann insbesondere einen Stellmotor oder einen Aktuator umfassen, mit dem die Spitze 303 der Befüllvorrichtung dreidimensional bewegt werden kann. Ferner kann vorgesehen sein, dass der Befüllautomat 500 ferner einen weiteren Antrieb aufweist, mit dem der Befüllautomat 500 in Gänze bewegt und/oder rotiert werden kann.

Die Befüllvorrichtung 300 weist ferner einen Sensor 305 auf. Der Sensor 305 kann eingerichtet sein, einen Füllstand des Schüttguts im Vorratsbehälter 200 zu ermitteln. Die Bewegung der Spitze 303 der Befüllvorrichtung 300 kann dann mittels des Antriebs 501 ferner anhand des Füllstands geregelt werden. Hierzu kann der Befüllautomat 500 eine Regelung 502 aufweisen, wobei die Regelung 502 Signale des Sensors 305 auswerten kann. Alternativ kann die Regelung 502 auch ohne Sensor 305 zur Steuerung der Bewegung der Spitze 303 der Befüllvorrichtung 300 dienen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Einfüllstutzen (100) mit einer ersten Öffnung (110), einer zweiten Öffnung (120) und einem zwischen der ersten Öffnung (110) und der zweiten Öffnung (120) liegenden Rohrabschnitt (130), wobei die erste Öffnung (110) einen ersten Flächenschwerpunkt (111) und die zweite Öffnung (120) einen zweiten Flächenschwerpunkt (123) aufweist, wobei der Einfüllstutzen (100) derart an einem Vorratsbehälter (200) anbringbar ist, dass die zweite Öffnung (120) dem Vorratsbehälter (200) zugewandt ist und die erste Öffnung (110) vom Vorratsbehälter (200) abgewandt ist, wobei ein Querschnitt des Rohrabschnitts (130) von der ersten Öffnung (110) zur zweiten Öffnung (120) größer wird, wobei eine Mantellinie des Rohrabschnitts (130) in einem unteren Bereich (131) eine von einer Richtung einer Verbindungslinie (133) zwischen dem ersten Flächenschwerpunkt (111) und dem zweiten Flächenschwerpunkt (123) abweichende Mantellinienrichtung und in einem oberen Bereich (132) eine von der Richtung der Verbindungslinie (133) abweichende Mantellinienrichtung aufweist.

2. Einfüllstutzen (100) nach Anspruch 1, wobei der Querschnitt des Rohrabschnitts (130) von der ersten Öffnung (110) zur zweiten Öffnung (120) bei gleichbleibender Querschnittsänderung größer wird.

3. Einfüllstutzen (100) nach Anspruch 1 oder 2, wobei eine Befüllvorrichtung (300) derart in den Einfüllstutzen (100) eingesteckt werden kann, dass die Befüllvorrichtung (300) zumindest eine erste Einsteckposition (301) und eine zweite Einsteckposition (302) einnehmen kann, wobei die Befüllvorrichtung (300) in der zweiten Einsteckposition (302) nach unten geneigt ist.

4. Einfüllstutzen (100) nach einem der Ansprüche 1 bis 3, wobei die erste Öffnung (110) kreisförmig ist, wobei eine erste Dichtung (140) an der ersten Öffnung (110) angeordnet ist.

5. Einfüllstutzen (100) nach Anspruch 4, ferner aufweisend eine Verschlussklappe (160), wobei die Verschlussklappe (160) im geschlossenen Zustand (162) an erster Dichtung (140) anliegt.

6. Einfüllstutzen (100) nach Anspruch 4 oder 5, wobei die zweite Öffnung (120) oval ist, wobei sich die zweite Öffnung (120) aus zwei Halbkreisbögen (121) und zwei Geraden (122) zusammensetzt.

7. Einfüllstutzen (100) nach Anspruch 4 oder 5, wobei die zweite Öffnung (120) kreisförmig ist und wobei der Rohrabschnitt (130) kegelstumpfförmig ist.

8. Einfüllstutzen (100) nach einem der Ansprüche 1 bis 7, wobei die Mantelfläche des Rohrabschnitts (130) im unteren Bereich (131) ein Gefälle von mindestens zwei Grad, insbesondere von mindestens drei Grad und/oder ein Gefälle größer dem einer Normalen auf der Seitenwand an der Einsteckposition aufweist.

9. Einfüllstutzen (100) nach einem der Ansprüche 1 bis 8, wobei die Mantelfläche des Rohrabschnitts (130) im oberen Bereich (132) eine Steigung von mindestens fünf Grad, und/oder eine Steigung größer der einer Normalen auf der Seitenwand an der Einsteckposition aufweist.

10. Einfüllstutzen (100) nach einem der Ansprüche 1 bis 9, ferner aufweisend eine Einbaumulde (150), wobei die erste Öffnung (110) in der Einbaumulde (150) angeordnet ist.

11. Einfüllstutzen (100) nach einem der Ansprüche 1 bis 10, ferner aufweisend ein entnehmbares Befüllelement (170), wobei das Befüllelement (170) einen in den Rohrabschnitt (130) einsteckbaren Abschnitt (171) und eine Einfüllöffnung (172) aufweist, wobei die Einfüllöffnung (172) mit dem Abschnitt (171) verbunden ist, wobei die Einfüllöffnung (172) einen größeren Querschnitt aufweist als die erste Öffnung (110).

12. Vorratsbehälter (200) mit einem Einfüllstutzen (100) nach einem der Ansprüche 1 bis 11.

13. Vorratsbehälter (200) mit einem Einfüllstutzen (100) nach Anspruch 3, wobei der Vorratsbehälter (200) derart ausgestaltet ist, dass ein mittels der Befüllvorrichtung (300) angeordnet in der ersten Einsteckposition (301) eingebrachtes Schüttgut innerhalb des Vorratsbehälters (200) einen Schüttgutkegel (220) ausbilden kann und wobei ein Volumen des Schüttgutkegels (220) derart ist, dass bei einer gleichmäßigen Verteilung des Schüttguts im Vorratsbehälter (200) ein Füllstand (230) des Schüttguts unterhalb der ersten Öffnung (110) ist.

14. Schienenfahrzeug (400) mit einem Vorratsbehälter (200) nach Anspruch 12 oder 13.

15. Befüllautomat (500) zum Befüllen eines Vorratsbehälters (200) eines Schienenfahrzeugs (400), aufweisend eine Befüllvorrichtung (300) und einen Antrieb (501), wobei der Antrieb (501) eingerichtet ist, eine Spitze (303) der Befüllvorrichtung (300) während eines Befüllvorgangs auf einer vorgegebenen Bewegungsbahn zu bewegen.
